# EUROPEAN PATENT APPLICATION

(11) **EP 3 812 987 A1**
(43) Date of publication of application: **28.04.2021**
(21) Application number: 19425075.9
(22) Date of filing: 22.10.2019
(51) Int. Cl.: G06Q 10/06, G06Q 10/10, G06Q 50/26

(54) **METHOD TO ASSESS OPERATIVE RISK AND FEASIBILITY OF A PREDETERMINED FLIGHT MISSION OF A DRONE**

(71) Applicant: Eurousc Italia società a responsabilità limitata, 00193 Roma (RM) (IT)
(72) Inventor: DUCCI, Marco, 00183 Roma (RM) (IT); TOMASELLO, Filippo, 00054 Fiumicino (RM) (IT); CARTA, Matteo, 00151 Roma (RM) (IT)
(74) Representative: Emmi, Mario

(57) **Abstract**

The present invention concerns a method for generating a report of analysis of risks for performing an operative mission of a drone according to the SORA protocol, comprising the following steps:
- Arrangement of an electronic computer equipped with suitably programmed processor;
- Execution of a preliminary step of analysis of risk, comprising the generation of a first electronic template equipped with at least a field having inside a plurality of pre-existing electronic data concerning at least the geographic flight area and/or the type of flight airspace,
- Processing of said data acquired through suitable algorithm so as to generate a first output of risk, said algorithm comparing the electronic data inserted and/or found by means of external databases with electronic reference parameters so as to give a positive or negative result;
- In the event of positive result, electronic generation of further fields within which inserting further electronic data;
- Processing of said further electronic data through said algorithm so as to generate a final output of risk.

## Description

### Field of the invention

The present invention relates to the technical field of drones.

More specifically, the invention relates to an innovative method which enables to generate, in simple and versatile manner, a report of analysis of risks and feasibility determined according to the SORA protocol for a given flight operation.

### Brief outline of prior art

Drones are aerial vehicles operating without a pilot on board (therefore with remote piloting) in use for a long time by now. They are used for the most varied needs and therefore they are not simply a game tool for amateurs but, on the contrary, are increasingly used by professionals (military, photo reporters, technicians, etc.) for the most varied needs.

For example, drones are used to fly over predetermined areas at risk and carry out shooting and surveillance. For example, they can be used for inspections of industrial plants, traffic, in military or war zones, etc.

In fact, the drone can be equipped with cameras and can acquire high-definition images even in areas that would be impenetrable to normal aircrafts or that could imply a danger for the pilots.

In fact, the shooting-down or falling of a drone does not imply the loss of human lives because, as mentioned, it operates without crew.

Therefore, due to the increasingly wider use of these devices, the EU legislator has given a mandate to the EASA (*European Aviation Safety Agency*) to prepare common safety rules at European level, as is already in force for normal vehicles with pilot on board, to be implemented by July 2020.

For all drones whose operations will be classified as medium risk (for example, non-visible operations in populated areas to conduct pipeline inspections, traffic monitoring, etc.), the legislation will provide for the need for the operator to prepare an assessment of risks in order to demonstrate that the mission can be carried out in safe conditions and therefore enable to obtain authorization for the operation by the competent authority.

Without this authorization the operator will not be authorized to fly the drone and carry out the specific operation.

Therefore, it is necessary to make an analysis of risk based on predetermined operating conditions and proceed to the drafting of a report containing the assessment of risk and identification of the mitigations necessary to keep it below an acceptable threshold.

The methodology of assessment of risk recommended by EASA has been named with the acronym SORA (*Specific Operations Risk Assessment*), and implements the method developed and issued by the *Joint Authorities for Rulemaking on Unmanned Systems* (JARUS).

This method has the purpose of identifying all the possible factors of risk to perform a certain operation with the drone, and, consequently, provides a list of safety requirements to be implemented in order to guarantee that this operation can be performed safely.

However, to do that, it is necessary to correctly enter a series of starting data so that the SORA method gives as result a reliable list of risks and consequently a valid list of safety requirements to be implemented.

In fact, it is necessary to insert many data such as: features of the various types of flight airspace, density of population in the flight areas, presence of critical infrastructures etc. Such information must be crossed with specific information related to the used drone, the skills and competence of the operator, the procedures in use etc.

For example, if one intends to carry out a monitoring mission of a power line, it is necessary to know the density of population of the flight areas in real time since an accidental fall of the drone would clearly have more serious consequences if it occurred over populated areas or gatherings of people. Furthermore, it is necessary to collect information about the possible presence of other aircraft to avoid in-flight impacts that could have catastrophic consequences. Finally, it is necessary to define which the procedures are provided in the event of emergency, which are the pilot's skills for flight management and which are the technical features of the drone that could mitigate the risk, for example the presence of an automatic opening parachute in the event of loss of control.

Therefore, the SORA method, to be effective and give valid and reliable results, requires the inclusion of various parameters in order to create an accurate report of the risk of the operation and the mitigations to be undertaken on a case-by-case basis to ensure the safety of the operation.

Therefore, the development of a report on analysis of risk requires the inclusion of much information with great care. Obtaining and processing such information may take many days in order to generate the final document, i.e. the document that identifies risks, highlights the mitigations that must be adopted for the protection against these risks and therefore that demonstrates the feasibility of the secured operation.

Therefore, there arises a problem of creating a documentation concerning safety necessary due to legislation but very complex to be implemented and that if wrong may imply the impossibility to carry out the operation with the drone. This documentation is requested without distinction to anyone who operates with the drone, therefore also to who is not necessarily a professional and therefore this further complicates the preparation of the documentation.

### Summary of the invention

Therefore, the aim of the present invention is to provide a method which enables to resolve said technical drawbacks.

In particular, the aim of the present invention is to provide a method which enables to arrange a safety report, in order to avoid risks and mitigations to adopt in a certain mission of a drone, whose report is intuitive and of simple and fast creation, with no risks of errors.

Therefore, these and other aims are achieved through the present method for generating a report of analysis of operative risks for performing an operative mission of a drone according to the SORA protocol, according to claim 1.

This method comprises the following steps:
- Arrangement of an electronic computer (1, 2) equipped with suitably programmed processor;
- Execution of a preliminary step of analysis of risk, said execution comprising the generation through said processor of a first electronic template equipped with at least one field having inside a plurality of pre-existing electronic data concerning at least the geographic flight area and/or the type of flight airspace, the said electronic template being configured to further enable the insertion of a flight route of the drone on an electronic map, the method providing the selection of at least an electronic datum concerning the said geographic flight area and/or the flight airspace and/or the insertion of the flight route so that, upon inserting the said flight route, the electronic processor acquires the selected data and, in the event of insertion of said flight route, the electronic computer connects remotely to one or more external databases (10, 20) and downloads one or more data relative to the flight area and/or the type or airspace depending on the inserted flight route;
- Processing of said data acquired through suitable algorithm so as to generate a first output of risk, said algorithm comparing the electronic data inserted and/or found by means of external databases (10, 20) with electronic reference parameters so as to give a positive or negative result.

Therefore, the preliminary step enables already to achieve a first result, and in the event of negative result, the system suggests corrective actions.

Advantageously, in the event of positive result, it is provided an electronic generation of further fields within which inserting further electronic data and the further processing of said further electronic data through said algorithm so as to generate a final output of risk.

In this manner, all the above-mentioned technical drawbacks are readily resolved.

Information collected according to the present method are substantially the same of the traditional method but the method according to the present invention enables to collect and process automatically most information on the basis of simple inputs by the user.

For example, the user can readily draw on an electronic map the trajectory he intends to follow and select from a list the drone which will be used. The system identifies automatically the features of the flight airspace through an electronic connection to suitable databases and assesses through suitable algorithm whether the features of the drone are suitable for the mission to be performed.

Therefore, in the system described here, the report is generated automatically by using information inserted by the user and collected automatically by relevant sources (e.g. databases of airspaces, databases of density of population, database of models of drones with relative technical features).

In this manner, the whole process is automatized and free from mistakes. Moreover, the user is guided step by step to filling in the fields and the algorithm does not proceed to further steps where there is no positive correspondence of the previous step.

Further advantages can be inferred by the remaining dependent claims.

### Brief description of drawings

Further features and advantages of the present method, according to the invention, will become apparent from the following description of preferred embodiments thereof, given only by way of non-limiting example, with reference to the attached drawings, wherein:
- Figure 1 depicts a schematization of a PC which is connected to a main server, equipped with suitable processors, which determines the processing platform of the said report;
- Figure 2 and figure 3 depict a flow chart concerning the first part of implementation of the present method;
- Figure 4 depicts the template for inserting data relative to the first part of implementation of the present method;

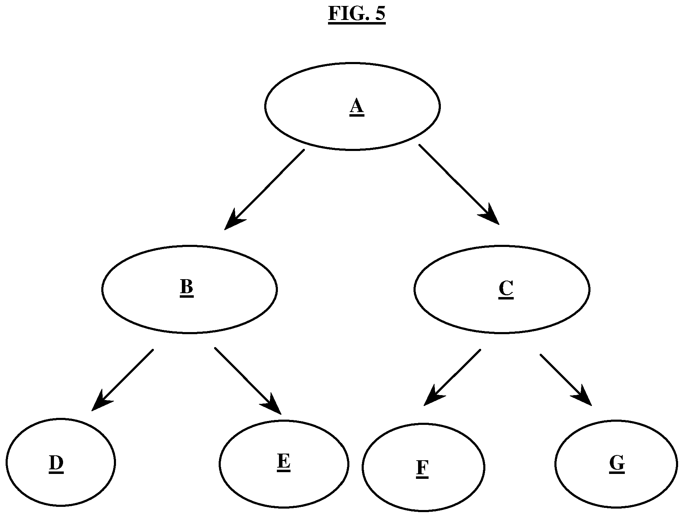

- Figure 5 depicts a tree structure of the algorithm which checks inserted data concerning the template of figure 4 and processes the output;

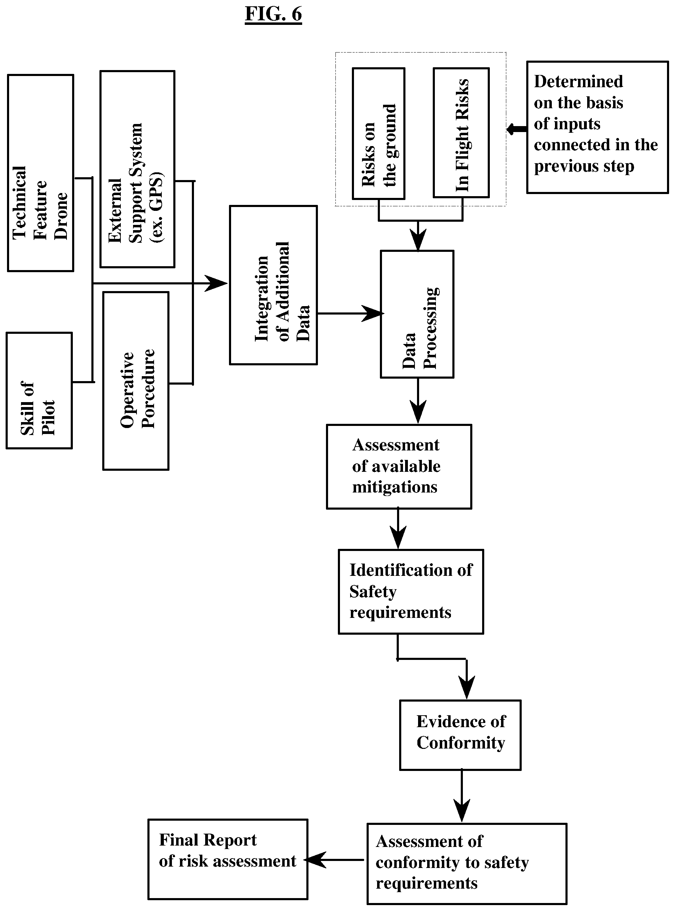

- Figure 6 indicates a flow chart relative to the processing after the preliminary step in order to extrapolate the final report;
- Figure 7 schematizes some templates where to insert pre-selectable data relative to the diagram of figure 6, in particular mitigation and correspondence to requisites;
- Finally, figure 8 schematizes an electronic construction of a flight route relative to the preliminary step of figure 4.

### Description of some preferred embodiments

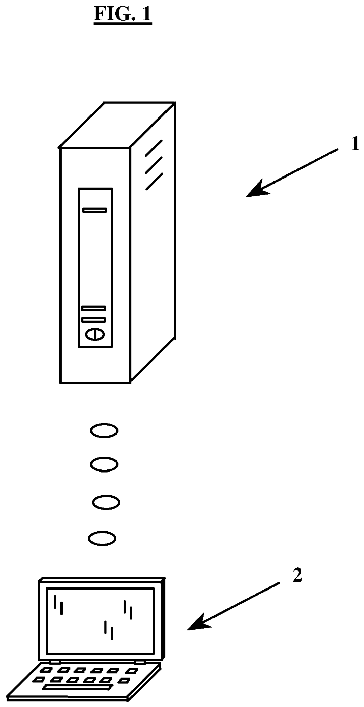

According to the present method, figure 1 depicts a main server 1 which generates the software platform subject of the present invention.

Therefore, as depicted in figure 1, the server is accessible through any suitable device to a connection through the internet, for example a PC 2, a notebook, mobile telephony device, etc.

Therefore, the connection to the main server gives access to a main page in which the user has preferably to insert his own credentials to access a specific page of a private area.

Within one's own private area, it is necessary to insert step by step informational data in order to generate automatically the report of risk subject of the invention.

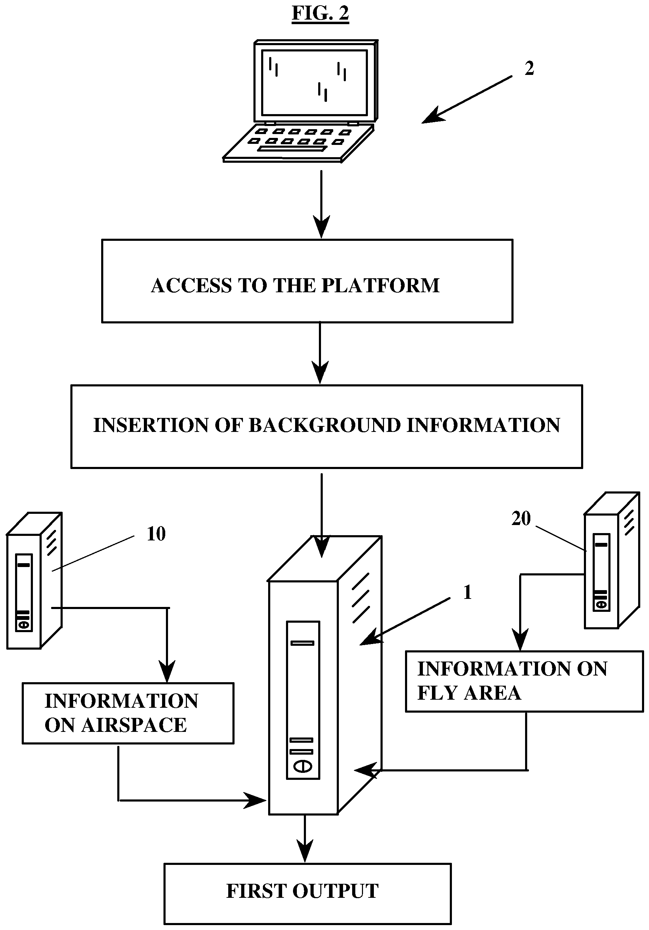

Therefore, figure 2 depicts a schematization of a first preliminary step of analysis.

The preliminary step, by means of a guided insertion of specific data and an automatic processing through a suitable algorithm, determines a first output which may order a flight unsuitability.

### FIRST PRELIMINARY STEP FOR FIRST OUTPUT:

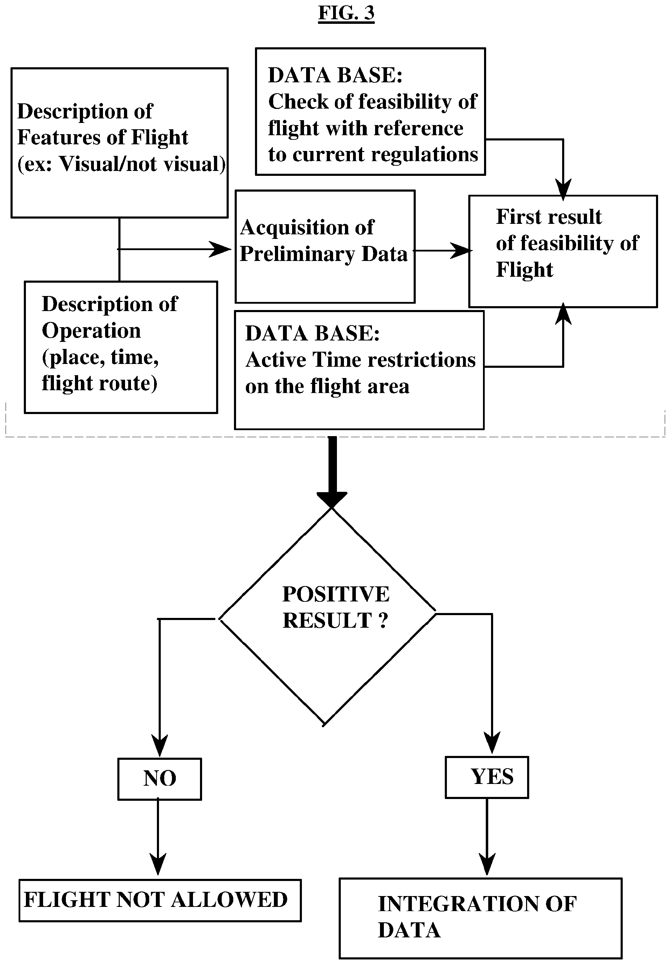

After the access to the platform, the system guides the user to insert background information to give a first positive or negative result (see figure 2 and 3).

In the event of negative result, the system stops while in the event of positive result, it goes on with the generation of the whole report.

Therefore, the preliminary step serves for generating a first output which enables to carry on to the following step and serves to stop the passage to said following step where fundamental and primary requisites are not met.

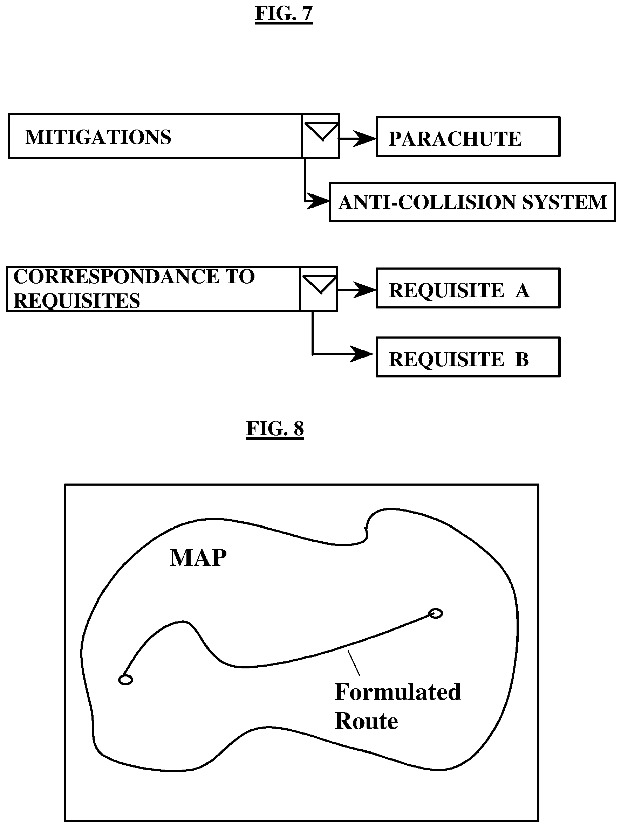

There are preferably three types of information to be inserted in the order of this preliminary automatic analysis, i.e. the following ones:
- *Type of drone:* the user can select the drone from a list (e.g. a pull-down menu) or insert manually necessary technical information (sizes, weight, maximum speed, etc.);
- *Type of flight area* (therefore, information relative to the features of the ground area where the flight operates): the user can indicate the type of area by choosing from a list (pull-down menu with options such as: *"populated area"* or *"unpopulated area", "restricted area",* etc.) or draw the mission on a map and in this case, information is collected automatically by external databases (databases 10 and 20 of figure 2) to which the main server is connected; provided information will also include date/time of the mission so as to assess the local features of the flight area (ex. presence of gatherings of people due to specific events). Figure 8 schematizes the possibility to insert electronically a flight route on an electronic territorial map.
- *Type of flight airspace:* even in this case, exactly like the case above, the user can select the most suitable cases from a list (pull-down menu: "proximity of airport", segregated airspace", "controlled airspace", etc.) or the system may collect information by connecting to an external database using as input the drawing of the mission (map) described in the previous point (see always the connection to external servers 10 and 20); information on the flight airspace enable to assess mainly the possibility to find other aircrafts in this airspace;

Therefore, figure 2 schematizes the connection to the main server which generates the possibility to enter the private area and enables to insert the above-mentioned data, once the program has been initialized, so that the processor of the main server processes them to give an output which is returned to the connection PC. The inserted data can determine, if they are not selected from a pull-down menu but they are inserted through the drawing of the mission on map, an automatic connection to download necessary data from external databases.

Figure 3 schematizes exactly these data in a flow chart. They are processed to give an output. Therefore, figure 2 equally depicts the schematization of figure 3, thus highlighting the connection of the main server to external databases in the event that data are not preselected from a pull-down menu but they must be found by the main server itself on the basis of the initial inputs provided, i.e. the flight route on map.

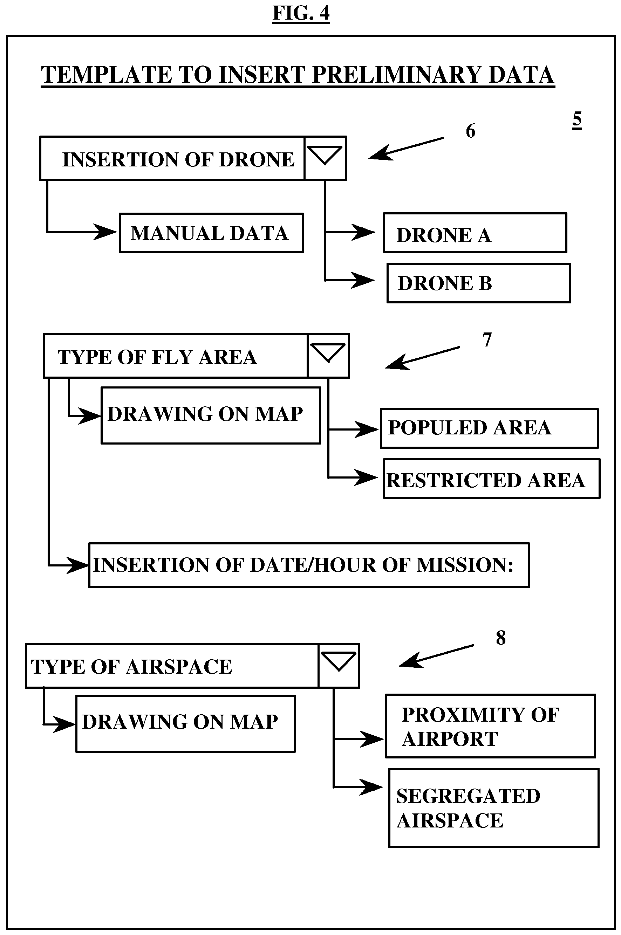

Therefore, figure 4 schematizes the software page visualized on the operator's PC so that the operator can insert the above-mentioned data (such as the drawing of mission on map with time and date) in order to enable the server to download potential data from pre-existing databases.

Therefore, figure 4 depicts the pull-down menu relative to the type of drone, or, in the event that the pull-down menu does not provide what is necessary, the possibility to insert main data manually, in particular the realization of the route (even in this case, this is guided on manual insertion) and data on the type of drone.

In the same way, as introduced above, there are visible pull-down menu relative to the flight area and type of airspace where data are selectable from the pull-down menu or automatically obtainable from the drawing of the mission on map. The manual insertion in this case provides just a drawing of the mission on map and therefore the connection to external servers to download information relative to the indicated geolocation (therefore, density of population in the flight area at the time and on the date of mission together with the scheduled air traffic).

Therefore, definitely, the connection to external servers occurs only if no pre-packed data are selected from the various pre-existing menu, since, in this case, starting from a drawing of a mission on map, therefore a flight route, the server finds what is necessary from external databases. Instead, technical data on the drone can be selected manually in suitable empty field where pre-existing fields do not own correct data for the specific field.

The system provides a guide to the insertion in all the information through examples and explanations and always giving the possibility to choose from lists, whose elements can vary depending on information provided in the previous steps.

The algorithm works on geographic and temporal base. The user can indicate a circular area or a trajectory on the map. In both cases, the database is queried to give information relative to the airspace and ground areas relative to the area indicated by the user in addition to a buffer which depends on the flight level.

Example: if the mission is performed at maximum 120 m height, there are collected information relative to the area indicated by the user are collected increased by 240 m (120 m x 2). The time element is used to query databases containing information on active restrictions only at specific time intervals.

Once such initial information has been processed, always as depicted in figure 2, the system provides a first output on the feasibility of flight of the drone and the skills of the user to meet the required safety requirements.

Data which change from time to time are basically place and date. The used drone and information relative to the operator and the pilot can remain unchanged. For the insertion of the place, the system provides a map on which the user can draw the mission indicating an area where to move at will or a trajectory defined by one or more waypoints with relative information on height. In addition, the user will have to insert in a template information relative to the date and range of time where he intends to fly.

It is necessary to fill in all the templates provided by the tool to complete the process.

After the insertion of preliminary information, the system provides as output a preliminary assessment of feasibility of the mission, taking into account only law restrictions, without assessing specific risks of the mission yet.

If this preliminary assessment is positive, the system carries on the processing in order to extrapolate automatically a final report of risk containing the whole assessment and the modalities through which the operator can prove his correspondence to safety requirements.

Once all the fields of figure 4 have been filled in, it is provided an algorithm, for example tree structure, which analyzes inserted data and checks whether each inserted datum falls into a safety parameter preset by the algorithm. If the correspondence is positive, the algorithm passes in its analysis to a subsequent node of the tree structure while, if it is negative, it stops and gives a negative result. In the event of a negative result, the algorithm suggests to the user possible variations of the inputs that would enable to pass to the next nodes, or modalities to make the operation allowed according to the regulations in force.

The transition to all subsequent nodes obviously leads to an output of a positive result of risk assessment.

For example, if the drone is not classified among drones suitable for flying in populated areas, the algorithm which has in input the type of drone and the provided flight area gives as output no authorization to the mission.

On the contrary, if the output is positive, one proceeds to the following step described below.

For example:
- Drone of great size and weight [insertion of sizes and weight manually or by selecting the type of drone] ;
- Flight area with high density of population in a populated area [the system downloads from the map and traces the identification of features of the ground area];

The algorithm can be set so that:
"if WEIGHT AND SIZES > A VALUE and POPULATION > A VALUE then NO AUTHORIZATION".

The example above is an obvious example of programming parameters according to a cycle *if, then, else.*

Moreover, collected information is inserted in a template which already contains a prearranged text by using open source applications. This template will be used in the subsequent step for developing the complete report of assessment of risks.

If the preliminary result of the report is negative, therefore it is not possible to perform the operation safely, the system further suggests possible strategies to mitigate the risk further and/or to meet the required requirements.

Differently, if the first result of feasibility of the flight is positive, the system integrates further necessary information to generate the final report as descripted below.

### SUBSEQUENT STEP:

The system requires the insertion of the following further data, in order to give the final output:
- *Available mitigations:* the user must check from a list which strategies of mitigation he is able to implement (ex. parachute on board of the drone, system to avoid collisions with other planes); for example, if the user selects to fly over un unpopulated area, mitigations are not requested, since the level of risk is already the lowest;
- *Correspondence to requisites:* the user must indicate whether he is able to meet the safety requirements. A list is submitted to him where he must select the requisites he met and, when necessary, upload a document to prove this correspondence.

Therefore, figure 7 depicts the screenshot appearing in the subsequent step for the insertion of the above-mentioned data, i.e. possible available mitigations and correspondence to predetermined requisites.

### STEP OF COMPLETION OF REPORT:

For this purpose, figure 4 depicts a continuation of the flowchart where the result is positive.

Therefore, the system turns to a subsequent step in which additional data are requested in guided manner (see item "integration of additional data").

Additional data are basically the proofs that the operator is able to meet the requested requirements. These are generally in the form of documents, which the operator should have arranged separately and the system will ask to upload them to prove the correspondence to requirements. Requirements concern features such as: procedures of operation and emergency, procedures of maintenance, skills of staff, specific safety system of the drone.

Such data are processed to determine the correspondence to necessary safety requirements, momentarily in a very simple way, i.e. by requesting to upload documents proving the correspondence (in .doc, .pdf, .jpg format etc.).

Then it is provided an automatic check of contents of documents.

Additional data requested are as a function of the type of mission selected by the user and defined in the first step. Therefore, the algorithm determines, on the basis of the provided inputs, which mitigations can be potentially applied. Depending of the skills of the operator to implement such mitigations to reduce the level of risk, the safety requirements to be implemented may vary. The safety requirements to be implemented as a function of available mitigations and of the final level of risk are defined by the SORA methodology and implemented in the system through a tree-structure algorithm which carries out subsequent checks by requesting the user to prove the correspondence to requisites. If the user is not able to prove them, the process stops and the algorithm suggests to the user possible strategies to reduce the risk and perform the mission safely with fewer requirements to be met.

Example: the operator wishes to fly over a town area to perform movie shooting. The first step gave positive result, since there are no rule limitations to perform the mission. In the subsequent step, the operator indicates that no specific mitigations are provided. Then, the algorithm highlights the requirements to be met by crossing the input data with the rules provided by the SORA methodology. Among them, for example, there is the need to obtain a project certification of the drone, that is a certificate by the competent authorities which proves that the drone complies with determined industrial standards, to ensure the safety of its flight. However, the operator does not own this certification. Then the algorithm highlights this blocking point and suggests to the user possible modalities which would eliminate the need to meet the requirement above by reducing the risk. Many modalities may exist since the level of risk is as a function of different parameters. The system is designed to store in the memory all the possible combinations of input and output and then to suggest each possible variation which gives the required output, i.e. no need to meet a given requisite. Clearly, the algorithm reduces the number of possible combinations by taking into account the restrictions inserted by the user, for example the area where one wishes to perform the mission, supposing that it cannot be modified.

In an embodiment of the invention, provided the described functionality, the system could be installed on a local net of the operator. The user would access it only through PC inside within the company and with the PC programmed to carry out internally all the described operations on the basis of the described algorithms. Substantially, information is stored locally and not on the external server which is replaced in this case by the same local PC. The same PC processes the functions of the server and the same PC connects to external databases.

## Claims

1. A method for generating a report of analysis of risks for performing an operative mission of a drone according to the SORA protocol, the method comprising the following steps:
- Arrangement of an electronic computer (1, 2) equipped with suitably programmed processor;
- Execution of a preliminary step of analysis of risk, said execution comprising the generation through said processor of a first electronic template (5) equipped with at least a field (6, 7, 8) having inside a plurality of pre-existing and selectable electronic data and concerning at least the geographic flight area and/or the type of flight airspace, the said electronic template (5) being configured to further enable the insertion of a flight route of the drone on an electronic map, the method providing the selection of at least an electronic datum concerning the said geographic flight area and/or the flight airspace and/or the insertion of the flight route so that the electronic computer acquires the selected data and, in the event of insertion of said flight route, the electronic processor connects remotely to one or more external databases (10, 20) and downloads one or more data relative to the flight area and/or the type or airspace depending on the inserted flight route;
- Processing of said data acquired through suitable algorithm so as to generate a first output of risk, said algorithm comparing the electronic data inserted and/or acquired by means of external databases (10, 20) with electronic reference parameters so as to give a positive or negative result.

2. The method, according to claim 1, wherein in the event of positive result of the said preliminary step, it is provided a further electronic generation of further fields within which inserting further electronic data and the processing of said further electronic data through said algorithm so as to generate a final output of risk.

3. The method, according to claim 2, wherein said further data include a field of mitigations with a plurality of data concerning safety systems of the drone and a field of correspondence of requisites.

4. The method, according to claim 2 or 3, wherein it is required the insertion in electronic format of predetermined documents.

5. The method, according to one or more of the preceding claims, wherein in the event of negative result, depending on the result, possible corrective actions are provided in output.

6. The method, according to claim 1, wherein the insertion of a flight route of the drone on an electronic map and the query of external databases occurs only in the event of missed selection of pre-existing electronic data.

7. The method, according to claim 1, wherein in said preliminary step three different field are provided and of which:
- A first field (6) relative to technical data of the drone;
- A second field (7) relative to the type of flight area;
- A third field (8) relative to the type of airspace.

8. A method (1), according to claim 7, wherein the said first field (6) comprises a plurality of pre-existing and selectable electronic data concerning the technical features of the drone and wherein the said electronic template is configured for further enabling the insertion in suitable electronic fields of further electronic data concerning the drone in addition to the pre-existing ones.

9. A method (1), according to claim 1, wherein said electronic computer equipped with processor is a remote server (1) which can be reached through the Internet by a PC (2).

10. A method (1), according to claim 1, wherein said electronic computer connects remotely to one or more external databases (10, 20) through the Internet.

11. The method, according to claim 10, wherein there are two of said external databases and one of them containing data relative to the flight airspace and one of them containing data concerning the flight area.

12. The method, according to one or more of the preceding claims, wherein said algorithm has a tree-structure.

13. The method, according to one or more of the preceding claims, wherein it is further provided the insertion of a datum relative to time and date, the algorithm carrying out said data processing in the preliminary step as a function of the said inserted time and date when it is planned the operative flight mission of the drone.

14. A software for generating the method according to the previous claims.

15. A processor programmed with said software according to claim 14.
